# EUROPÄISCHE PATENTSCHRIFT

(11) **EP 0 601 004 B1**
(45) Veröffentlichungstag und Bekanntmachung des Hinweises auf die Patenterteilung: **12.06.1996**
(21) Anmeldenummer: 92918179.0
(22) Anmeldetag: 28.08.1992
(51) Int. Cl.: G11B 33/04, A47B 87/00, A47B 81/06

(54) **REGALGESTELL**
SHELF FRAME
BATI POUR RAYONNAGE

(30) Priorität: 29.08.1991 DE 9110715 U; 18.11.1991 DE 9114351 U
(43) Veröffentlichungstag der Anmeldung: 15.06.1994
(73) Patentinhaber: BERKENBUSCH, Stefan, D-65197 Wiesbaden (DE)
(72) Erfinder: BERKENBUSCH, Stefan, D-65197 Wiesbaden (DE)
(74) Vertreter: TER MEER - MÜLLER - STEINMEISTER & PARTNER
(86) Internationale Anmeldenummer: EP9201992
(87) Internationale Veröffentlichungsnummer: WO9305511

(56) Entgegenhaltungen:
- EP-A- 0 334 457
- WO-A-92/10835
- CA-A- 951 703
- DE-U- 8 900 102
- DE-U- 9 012 805
- DE-U- 9 105 255
- DE-U- 9 105 484
- DE-U- 9 110 715

## Beschreibung

Die Erfindung betrifft ein Regalgestell gemäß dem Oberbegriff des Anspruchs 1. Insbesondere befaßt sich die Erfindung mit einem Regalgestell für die Aufbewahrung von Bild- und Tonträgerkassetten wie beispielsweise CD-Kassetten.

Ein solches Regalgestell für CD-Kassetten ist aus DE-U-91 05 255 bekannt. Dieses Regalgestell besteht aus drei am oberen und unteren Ende fest miteinander verbundenen Pfosten, die im Grundriß nach Art eines gleichschenkligen Dreiecks angeordnet sind, wobei die Basis des Dreiecks die Vorderseite bildet, von der aus die CD-Kassetten in waagerechter Stellung in den Zwischenraum zwischen den Pfosten eingeschoben werden können. Die Pfosten sind als im Querschnitt rechteckige Rohre oder Strangprofile ausgebildet und sind in ihrer Mantelfläche auf einer Seite mit einer Serie quer verlaufender Schlitze versehen, die zur Aufnahme von Auflagestegen für die CD-Kassetten dienen und nachträglich in das Strangprofil eingearbeitet werden müssen. Die Auflagestege werden durch dreieckige Drahtbügel gebildet, die mit ihren Ecken in die Schlitze der drei Pfosten eingreifen. Die Höhe der zwischen den einzelnen Auflagestegen gebildeten Einschubfächer läßt sich bei der Montage des Regals festlegen, indem jeweils zwischen den Auflagestegen ein oder mehrere Schlitze der Pfosten freigelassen werden. Somit besteht die Möglichkeit, eine bestimmte Anzahl von Einschubfächern für Einzel-CD- Kassetten und außerdem eine bestimmte Anzahl von Einschubfächern für Doppel-CD-Kassetten vorzusehen.

Ein Nachteil dieses herkömmlichen Regalgestells besteht jedoch darin, daß die Anordnung der Auflagestege und damit auch die Anzahl der Einschubfächer für Einzel- und Doppelkassetten nach der Montage fest vorgegeben ist. Wenn die Aufnahmekapazität für eine der beiden Kassettengrößen erschöpft ist, muß deshalb ein separates Regalgestell zusätzlich zu dem ersten Regalgestell aufgestellt werden, oder das Regalgestell muß demontiert werden, um die Anordnung der Auflagestege zu verändern.

Aus EP-A-0 334 457 ist ein als flacher Kasten ausgebildeter Behälter für CD-Kassetten bekannt, der an den Innenflächen seiner Längsseitenwände mit Trennstegen zur Abstützung der CD-Kassetten in vertikaler Stellung versehen ist. In den Innenflächen der Seitenwände des Kastens ist jeweils eine Serie von Einstecktaschen ausgebildet, in die jeweils ein Trennsteg mit einer schwalbenschwanzartigen Führung eingesteckt werden kann. Somit läßt sich hier die Anordnung der Trennstege variieren, ohne daß der Kasten demontiert werden muß.

Der Erfindung liegt die Aufgabe zugrunde, ein einfaches und kompaktes Regalgestell der eingangs genannten Gattung zu schaffen, das sich hinsichtlich der Anzahl und Anordnung der Einschubfächer flexibel an den jeweiligen Bedarf anpassen läßt.

Diese Aufgabe wird erfindungsgemäß mit den in Anspruch 1 angegebenen Merkmalen gelöst.

Vorteilhafte Weiterbildungen der Erfindung ergeben sich aus den Unteransprüchen.

Erfindungsgemäß sind die Pfosten des Regalgestells jeweils als Strangpofile ausgebildet, die mit einem durchgehenden Halteprofil versehen sind, das beispielsweise als Einschub- oder Rastprofil ausgebildet ist. Die Auflagestege sind an separaten Ensätzen, beispielsweise in der Form von Kunststomeisten ausgebildet, die lösbar in die Profile der Pfosten eingeschoben oder eingerastet sind. Bei dieser Lösung besteht somit die Möglichkeit, das Rastermaß der Emschubfächer dadurch zu verändern, daß die eingeschobenen oder eingerasteten Kunststoffleisten entfernt und durch entsprechende Leisten mit einer anderen Anordnung von Auflagestegen ersetzt werden. Vorzugsweise ist die Länge der Kunststoffleisten wesentlich kleiner als die Länge der Pfosten. so daß mehrere Kunststoffleisten übereinander in demselben Pfosten angeordnet sind und sich unittelbar aufeinander abstützen. Hierdurch wird eine kostengünstige Fertigung der Kunststoffleisten ermöglicht. Im Extremfall weist jede Kunststomeiste nur einen einzigen Auflagesteg und die Höhe eines einzelnen Emschubfaches auf.

Bevorzugt sind die Auflagestege für wenigstens einige der Einschubfächer als in vertikaler Richtung steife Federglieder ausgebildet, die sich beim Einschieben eines aufzunehmenden Gegenstandes in das Regal waagerecht in die Pfosten zurückdrücken lassen.

Die federnden Auflagestege können in verhältnismäßig geringen vertikalen Abständen angeordnet sein, so daß eine große Anzahl von Einschubfächern für sehr flache Gegenstände gebildet wird. Wahlweise können in demselben Regalgestell ohne irgendwelche Umrüstarbeiten jedoch auch Gegenstände aufgenommen werden, deren Höhe größer ist als der Abstand zwischen den Auflagestegen. In diesem Fall werden die oberen Auflagestege durch die Seitenwände des eingeschobenen Gegenstandes zurückgedrückt. Die zurückgedrückten Federglieder liegen dann elastisch an den Seitenwänden des Gegenstands an, so daß zugleich eine gewisse kraftschlüssige Fixierung des Gegenstands in dem Regal erreicht wird.

Das Regalgestell kann aus separaten, baugleichen und mit Auflagestegen versehenen Pfosten aufgebaut werden, die durch eine Fußplatte sowie eine Deckplatte oder dergleichen miteinander verbunden werden. Auf diese Weise wird eine rationelle und entsprechend kostengünstige Fertigung ermöglicht. Wenn das Regal lediglich drei senkrechte Pfosten aufweist, so sind die Auflagestege bei den beiden vorderen Pfosten einander gegenüberliegend angeordnet, und die Auflagestege an dem dritten Pfosten befinden sich auf der der Einschuböffnung zugewandten Vorderseite, so daß die eingeschobenen Gegenstände an drei Punkten stabil abgestützt werden. Wahlweise kann das Regalgestell jedoch auch in üblicher Weise aus vier senkrechten Pfosten mit paarweise gegenüberliegenden Auflagestegen aufgebaut sein.

Wenn die Auflagestege sämtlicher Einschub fächer als Federglieder ausgebildet sind, können Gegenstände mit verhältnismäßig großer Höhe aufgenommen werden. So ist es beispielsweise möglich, neben Eizel- und Doppel-CD-Kassetten auch Lautsprecherboxen mit geeignetem Grundriß in demselben Regalgestell unterzubringen. Zusätzlich können auch Einschiebeböden für Ziergegenstände und dergleichen vorgesehen werden.

Bei einem speziell für die Verwendung als CD-Archiv ausgelegten Regalgestell sind feste Auflagestege in einem den Maßen von Doppelkassetten entsprechenden Rastermaß angeordnet, und die Einsätze weisen jeweils einen federnden Auflagesteg auf, durch den das Doppel-Kassetten fach in zwei Fächern für Einzelkassetten unterteilt wird. Die handelsüblichen Doppel-CD-Kassetten weisen bekanntlich in einer ihrer Kantenflächen eine längs verlaufende Nut auf. Die Höhe der blattfederartigen Auflagestege an den Klammern ist an die Breite dieser Nut angepaßt. Wenn die Doppel-Kassetten so in das aus drei Pfosten bestehende Regalgestell eingeschoben werden, daß ihre mit der Nut versehene Kante dem hinteren Pfosten zugewandt Ist, so tritt der dortige federnde Aufnahmesteg in die Nut der Kassette ein ohne die Kassettenwand zu berühren. Auf diese Weise wird ein Zurückfedern der bis zum Grund eingeschobenen Kassetten vermieden.

Die Merkmale nach Anspruch 4 ermöglichen eine einfache und kostengünstige Erweiterung des Regalgestells um ein oder mehrere Anbauelemente. Bei dieser Lösung besteht das Grundelement des Regalgestells aus drei Pfosten, die lösbar miteinander verbunden sind und jeweils genau eine Reihe von Auflagestegen aufweisen. Ein Erweiterungsbausatz umfaßt einen weiteren Pfosten mit einer Reihe von Auflagestegen und einen Pfosten, der auf zwei Seiten mit Auflagestegen versehen ist und deshalb als "Zweifach-Pfosten" bezeichnet werden soll. Bei der Erweiterung des Regalgestells wird einer der beiden vorderen Pfosten des Grundelements durch den Zweifach-Pfosten ersetzt, und der freiwerdende Pfosten des Grundelements wird mit dem weiteren Pfosten des Erweiterungsbausatzes und dem Zweifach-Pfosten verbunden, so daß insgesamt zwei dreieckige Säulen entstehen, denen der Zweifach-Pfosten gemeinsam ist. Auf diese Weise wird mit geringem Material- und Arbeitsaufwand und Platzbedarf eine Verdoppelung der Regalkapazität erreicht.

Wenn die drei Pfosten des Grundelements durch eine Verbindungsplatte, beispiels,weise eine Fußplatte miteinander verbunden sind, so enthält der Erweiterungsbausatz eine entsprechende Verbindungsplatte für das Anbauelement. Diese Verbindungsplatte besitzt im wesentlichen den gleichen Grundriß wie die Verbindungsplatte des Grundelements, weist jedoch auf einer Ecke eine Ausnehmung auf, die zu der Ecke der Verbindungsplatte des Grundelements komplementär ist.

Im folgenden werden bevorzugte Ausführungsbeispiele der Erfindung anhand der Zeichnung näher erläutert.

Es zeigen:
- Fig. 1: eine Frontansicht eines Regalgestells für CD-Kassetten;
- Fig. 2: einen Grundriß des Regalgestells gemäß Fig. 1;
- Fig. 3: einen Schnitt durch einen Pfosten des Regalgestells gemäß einem anderen Ausführungsbeispiel;
- Fig. 4: eine Teil-Frontansicht des Pfostens gemäß Figur 3;
- Fig. 5: einen waagerechten Schnitt durch ein Regalgestell;
- Fig. 6: einen waagerechten Schnitt durch einen Pfosten des Regalgestells mit eingerastetem Einsatz;
- Fig. 7: eine Frontansicht des Einsatzes;
- Fig. 8: einen vertikalen Schnitt durch den Einsatz;
- Fig. 9: einen horizontalen Schnitt durch den Einsatz;
- Fig. 10: ein anderes Ausführungsbeispiel des Regalgestells;
- Fig. 11: ein weiteres Ausführungsbeispiel des Regalgestells;
- Fig. 12: einen Schnitt durch den Bodenbereich des Regalgestells gemäß Fig. 11;
- Fig. 13: ein zu einem Audio-Rack erweitertes CD-Regal;
- Fig. 14: Einsätze für die Aufnahme von Audiokassetten mit kleinerem Format; und
- Fig. 15 und 16: eine abgewandelte Ausführungsform des Einsatzes gemäß Figuren 6 und 7.

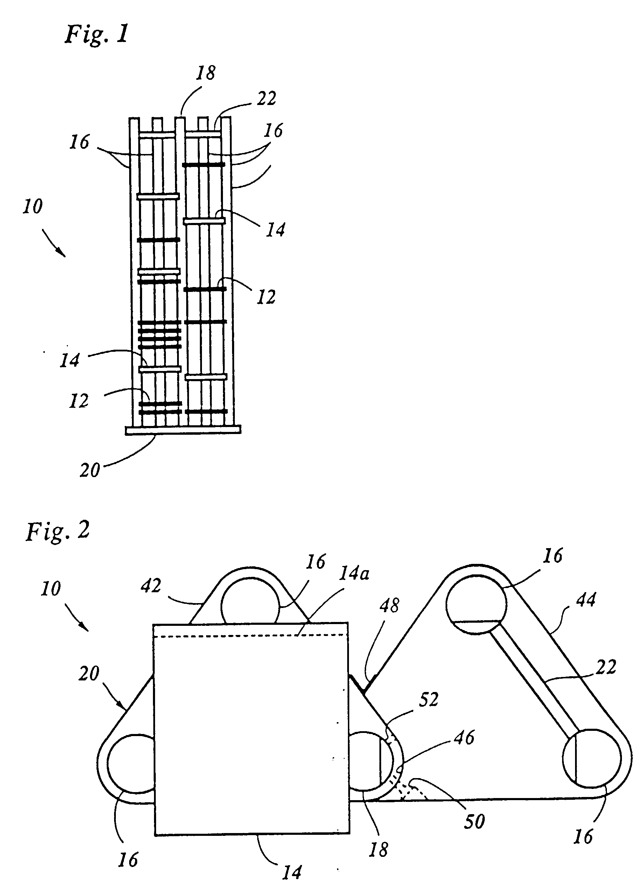

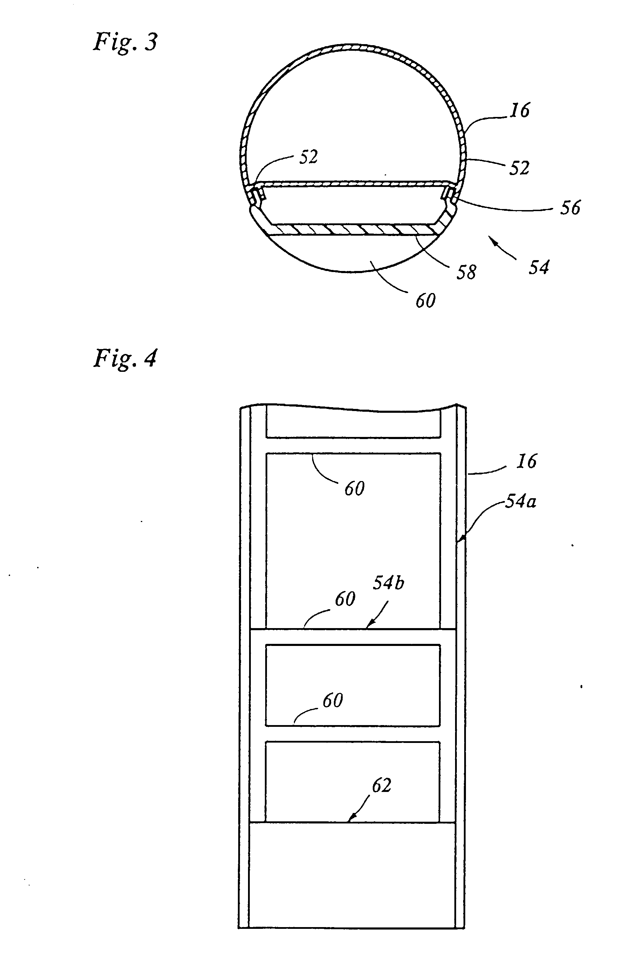

In Figuren 1 und 2 ist der allgemeine Aufbau eines Regalgestells 10 dargestellt, in dem sowohl Einzel-CD-Kassetten 12 als auch Doppel-CD-Kassetten 14 in zwei vertikalen Reihen untergebracht werden können. Das Regalgestell weist fünf senkrechte Pfosten 16, 18 auf, die gemäß Figur 3 in Form von zwei gleichschenkligen Dreiecken angeordnet sind, die einander an einer Ecke, bei dem Pfosten 18, berühren und mit ihren Basen in einer Linie ausgerichtet sind. Die Pfosten 16, 18 sind an ihrem unteren Ende durch eine Fußplatte 20 miteinander verbunden. Dicht unterhalb ihres oberen Endes sind die Pfosten paarweise durch sechs Sprossen 22 miteinander verbunden, von denen in Figur 3 lediglich eine eingezeichnet ist.

Wie in Figur 2 zu erkennen ist, besteht die Fußplatte 20 des Regalgestells 10 aus einer dreieckigen, an den Ecken abgerundeten Grundplatte 42 und einer sich daran anschließenden Erweiterungsplatte 44. Der Grundriß der Erweiterungsplatte 44 stimmt im wesentlichen mit dem Grundriß der Grundplatte 42 überein, weist jedoch an einer Ecke eine Ausnehmung 46 auf, die zu der Eckenkontur der Grundplatte 42 komplementär ist. Die Erweiterungsplatte 44 und die Grundplatte 42 sind durch einen Winkel 48 und eine Schraube 50 miteinander verbunden.

In einer modifizierten Ausführungsform sind die Grundplatte und die Erweiterungsplatte an den Ecken nicht abgerundet, sondern abgeschrägt. Dies hat den Vorteil, daß eine verletzungsgefährliche scharfe Spitze am Übergang zwischen der Ausnehmung 46 und dem vorderen Rand der Erweiterungsplatte 44 vermieden wird.

Zumindest der Pfosten 18 ist lösbar in der Grundplatte 42 befestigt. Beispielsweise kann der Pfosten 18 am unteren Ende mit einem Außengewinde versehen und in eine entsprechende Gewindebohrung der Grundplatte 42 eingeschraubt sein. Im gezeigten Ausführungsbeispiel wird der Pfosten 18 dagegen mit Hilfe einer Madenschraube 52 in der zugehörigen Öffnung der Grundplatte fixiert.

Die Sprossen 22, die die oberen Enden der Pfosten 16 und 18 miteinander verbinden, sind ebenfalls lösbar. Beispielsweise weist jede Sprosse 22 an jedem Ende einen Außengewindeabschnitt auf, der durch eine nicht gezeigte Bohrung in der Wand des Pfostens ragt und im Inneren des Pfostens mit einer Mutter fixiert ist. Wahlweise kann anstelle der Sprossen 22 jedoch auch am oberen Ende der Pfosten 16,18 eine Plattenkonstruktion ähnlich der Grundplatte 42 und der Erweiterungsplatte 44 vorgesehen sein.

In der einfachsten Ausführungsform besteht das Regalgestell lediglich aus drei identischen Pfosten 16, die auf der Grundplatte 42 angeordnet sind. Dieses Grundelement läßt sich dann durch einen Erweiterungsbausatz bestehend aus dem Pfosten 18, einem weiteren Pfosten 16 und der Erweiterungsplatte 44 zu dem in der Zeichnung dargestellten zweireihigen Regalgestell ergänzen. Bei der Erweiterung des Regals wird einer der drei Pfosten 16 des Grundelements entfernt, und an seiner Stelle wird der auf beiden Seiten mit Ausnehmungen und Auflagestegen versehene Pfosten 18 eingesetzt. Der entfernte Pfosten 16 und der zum Erweiterungsbausatz gehörende Pfosten 16 werden auf der Erweiterungsplatte 44 montiert, und diese wird mit Hilfe des Winkels 48 und der Schraube 50 mit der Grundplatte 42 verschraubt. Durch mehrere baugleiche Erweiterungsbausätze läßt sich das Regalgestell auf diese Weise beliebig erweitern.

Figuren 3 und 4 zeigen die Ausbildung des Pfostens 16 (oder 18) des Regalgestells 10. Bei dieser Ausführungsform wird der Pfosten 16 durch ein geschlossenes Strangprofil beispielsweise aus Aluminium gebildet, das mit Einschubprofilen 52 versehen ist. Anstelle der Klemmteile 30 ist bei dieser Ausführungsform eine Kunststoffleiste 54 vorgesehen, die mit Eingriffsprofilen 56 in die Einschubprofile 52 eingeschoben ist und eine Folge von Ausnehmungen 58 und Auflagestegen 60 aufweist. Gemäß Figur 4 sind mehrere Kunststoffleisten 54a,54b, die sich hinsichtlich der Anzahl und Anordnung der Auflagestege 60 unterscheiden, unmittelbar aufeinanderfolgend in die Einschubprofile des Pfostens 16 eingeschoben. Am unteren Ende des Pfostens ist außerdem ein Distanzstück 62 aus Kunststoff eingeschoben, das keine Auflagestege aufweist, sondern lediglich die Einschubprofile abdeckt und den Pfosten zu einem vollständigen Zylinder ergänzt.

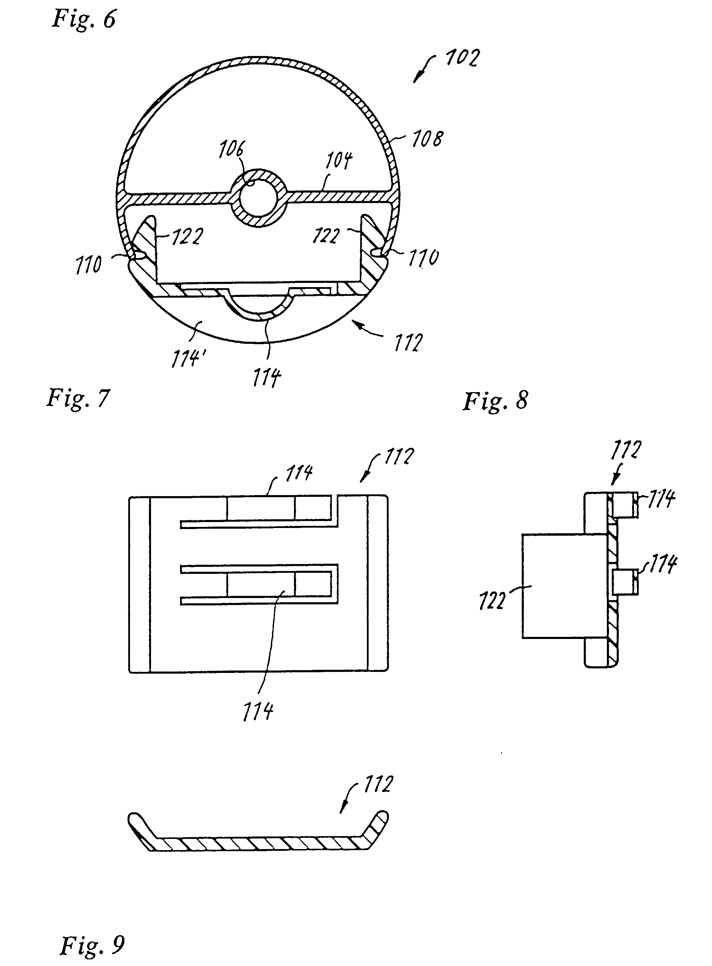

Die Aufteilung der Einschubfächer kann geändert werden, indem die Kunststoffleisten entfernt und durch entsprechende Leisten mit einer anderen Anordnung von Auflagestegen 60 ersetzt werden. Bei dieser Ausführungsform sind die oberen Enden des Regalgestells vorzugsweise so miteinander verbunden, daß die Einschubprofile nach oben offen sind, so daß die Kunststoffteile ausgetauscht werden können, ohne daß hierzu das Regalgestell demontiert werden muß. Wahlweise ist es auch möglich, die Kunststoffleisten 54,54a,54b mit Rastklauen zu versehen und in den Pfosten zu verrasten, wie in Fig. 6 gezeigt ist.

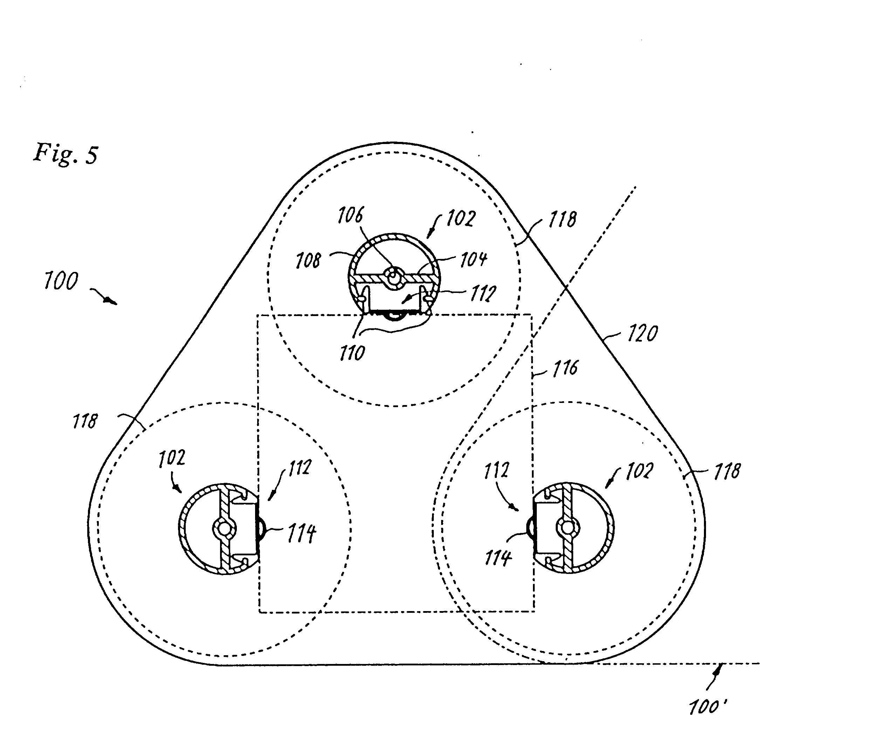

In Fig. 5 ist als weiteres Ausführungsbeispiel ein Grundelement 100 eines Regalgestells gezeigt. das drei senkrechte Pfosten 102 aufweist. Die Pfosten 102 sind als rohrförmige Strangprofile aus Aluminium ausgebildet und sind mit einem längs eines Durchmessers verlaufenden Steg 104 versehen, der in der Mitte einen Schraubenkanal 106 bildet. Die Umfangswand 108 der Pfosten ist jeweils an einer Seite unterbrochen und bildet dort ein Halteprofil 110, in dem mehrere übereinander angeordnete Einsätze 112 aus Kunststoff verrastet sind. Jeder Einsatz 112 bildet einen oder mehrere Auflagestege 114, und die auf gleicher Höhe an den drei Pfosten 102 angeordneten Auflagestege 114 bilden jeweils ein Einschubfach für einen aufzunehmenden Gegenstand, beispielsweise eine CD-Cassette 116.

Die Pfosten 102 sind jeweils am unteren Ende mit einer tellerförmigen Fußplatte 118 versehen. Eine im Grundriß dreieckige, an den Ecken abgerundete Bodenplatte 120 überdeckt alle drei Fußplatten 118 und bildet an der Unterseite eine in der Zeichnung nicht erkennbare Höhlung, in der die Fußplatten 118 untergebracht sind. Jeder Pfosten 102 ist durch eine in Fig. 5 nicht gezeigte, von unten in den Schraubenkanal 106 eingeschraubte Schraube mit der Fußplatte 118 und der Bodenplatte 120 verschraubt.

Wie aus Fig. 6. bis 9 hervorgeht, ist jeder der Einsätze 112 mit zwei Rastklauen 122 versehen, die in das Rastprofil 110 des Pfostens eingreifen. Der Auflagesteg 114 an der abgeflachten Frontseite des Einsatzes 112 ist als eigenelastische Zunge ausgebildet, die sich federnd in das Innere des Pfostens zurückdrücken 1äßt. Im gezeigten Ausführungsbeispiel ist gemäß Fig. 7 und 8 jeder Einsatz 112 mit zwei derartigen Auflagestegen 114 versehen. Wenn mehrere Einsätze 112 unmittelbar übereinanderliegend in das Halteprofil 110 eingesetzt sind, ergibt sich somit eine Folge von in gleichmäßigen Abständen angeordneten Auflagestegen 114, zwischen denen jeweils flache Einschubfächer gebildet werden. Wenn die Höhe des aufzunehmenden Gegenstandes jedoch größer ist als die lichte Höhe des Einschubfaches, beispielsweise wenn anstelle einer Einzel-CD-Cassette eine Doppel-CD-Cassette eingeschoben werden soll, so können die oberen Auflagestege 114 federnd ausweichen. Diese Auflagestege wirken dann zugleich als Klemmfedern, mit denen die Cassette im Einschubfach fixiert wird. Wenn sämtliche Auflagestege 114 als federnde Zungen ausgebildet sind, wird so eine große Flexibilität hinsichtlich der Unterbringung von Gegenständen mit unterschiedlichen Höhen erreicht. Wahlweise können abwechselnd mit den Einsätzen 112 jedoch auch Einsätze eingerastet werden, die mit starren Auflagestegen 114' versehen sind, wie in Fig. 6 gezeigt ist.

Anstelle der elastischen Rastklauen 122 können an den Einsätzen auch starre Profile ausgebildet sein, die zu den Halteprofilen 110 komplementär sind. In diesem Fall lassen sich die Einsätze der Reihe nach vom offenen oberen Ende des Pfostens her in das Halteprofil einschieben.

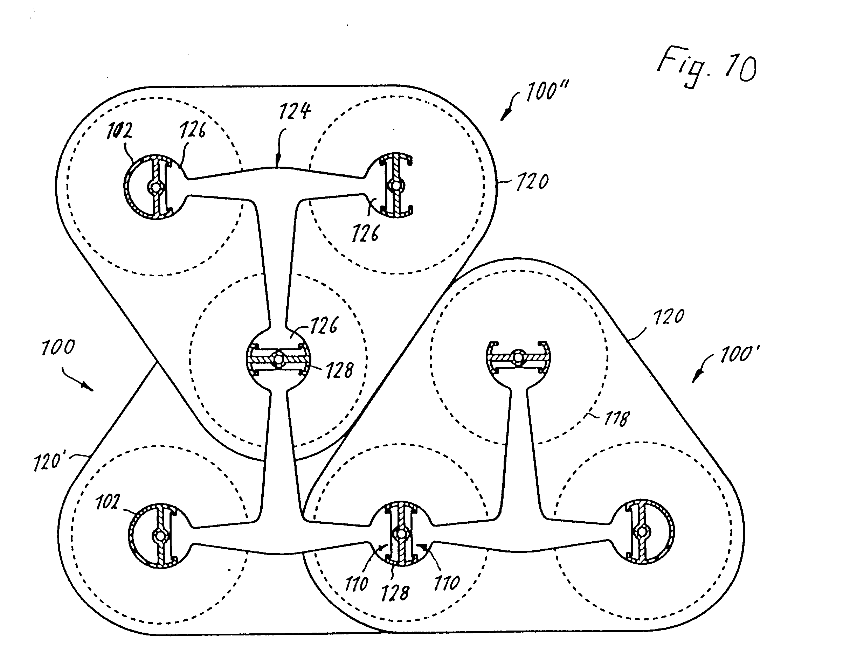

Die Pfosten 102 sind im Bereich ihres oberen Endes und wahlweise zusätzlich auch in mittlerer Höhe durch Verbindungsteile starr miteinander verbunden. Ein Beispiel derartiger Verbindungsteile 124 ist in Fig. 10 gezeigt. Die Verbindungsteile 124 werden durch T-förmig angeordnete Arme gebildet und sind an ihren drei freien Enden mit Eingriffsbereichen 126 versehen, die in der gleichen Weise wie die Einsätze 112 in den Halteprofilen 110 der Pfosten fixierbar sind. In dem Ausführungsbeispiel nach Fig. 10 sind die Eingriffsbereiche 126 mit starren Profilen versehen und von oben in die Halteprofile der Pfosten einschiebbar. Durch die Verbindungsteile 124 wird eine äußerst einfache Montage des Regalgestells ermöglicht und sichergestellt, daß die einzelnen Pfosten 102 auf ganzer Länge die richtigen Abstände zueinander aufweisen. Außerdem werden die Pfosten 102 durch die Verbindungsteile gegen Verdrehung um ihre Längsachse gesichert, so daß die Halteprofile - und somit auch die Einsätze 112 mit den Auflagestegen - stets korrekt orientiert sind. Wahlweise können die Verbindungsteile 124 auch als Fachböden ausgebildet sein, auf denen Kleingegenstände, Ziergegenstände und dergleichen abgestellt werden können.

In Fig. 10 ist außerdem eine Erweiterungsmöglichkeit für das Regalgestell veranschaulicht. Zusätzlich zu dem Grundelement 100 sind gemäß Fig. 10 zwei Anbau-Elemente 100' und 100" vorgesehen. Um das Grundelement 100 nachträglich in dieser Weise zu ergänzen, müssen die folgenden Veränderungen vorgenommen werden.

Nach dem Entfernen der Verbindungsteile 124 werden zwei der Pfosten 102 von der Bodenplatte 120 gelöst und durch Pfosten 128 ersetzt, die auf beiden Seiten mit Halteprofilen 110 versehen sind. Die Pfosten 128 werden dann mit Hilfe weiterer Verbindungsteile 124 mit den Pfosten 102 oder 128 der Anbau-Elemente verbunden. Falls weitere Anbau-Elemente angeschlossen werden sollen, werden für die Anbau-Elemente wiederum Pfosten 128 eingesetzt, die auf beiden Seiten mit Halteprofilen versehen sind. Sofern vorerst keine weiteren Anbau-Elemente angeschlossen werden sollen, werden Pfosten 102 mit nur einem einzigen Halteprofil 110 eingesetzt. Dabei kann auch der aus dem Grundelement 100 entfernte Pfosten 102 wieder verwendet werden.

Mit den leicht lösbaren und ebenso leicht wieder einsetzbaren Verbindungsteilen 124 lassen sich die oben beschriebenen Umrüstarbeiten mühelos bewerkstelligen.

Bei dem Ausführungsbeispiel nach Fig. 10 wird das Grundelement 100 in der Breite durch das Anbau-Element 100' und in der Tiefe durch das Anbau-Element 100" erweitert. Das Element 100" ist dabei von der Rückseite her bedienbar. Die Anbau-Elemente 100' und 100" weisen jeweils eine dreieckige Bodenplatte 120 auf. Für das Grundelement 100 wird dagegen nach der Erweiterung eine modifizierte Bodenplatte 120' eingesetzt, die an zwei Ecken mit Aussparungen für die Ecken der beiden anderen Bodenplatten versehen ist. Die Größe der Bodenplatten ist so gewählt, daß die Bodenplatten 120 der Anbau-Elemente 100' und 100" mit einer Seite dicht aneinanderliegen, so daß die Bodenplatten 120,120' zusammen eine geschlossene Fläche bilden.

Falls das Regalgestell lediglich durch das Anbauelement 100' in der Breite erweitert wird, wie in Fig. 5 durch eine strichpunktierte Linie angedeutet ist, so wird für das Grundelement 100 eine Bodenplatte eingesetzt, die nur an einer Ecke mit einer entsprechenden Aussparung für die angrenzende Bodenplatte versehen ist.

Gemäß einer zweckmäßigen Weiterbildung sind für jedes Grund- und Anbau-element zwei Bodenplatten vorgesehen, die die tellerförmigen Fußplatten 118 sandwichartig zwischen sich aufnehmen. Die untere und die obere Bodenplatte desselben Elements brauchen dabei nicht kongruent zu sein. Wenn die untere Bodenplatte eine Aussparung für die angrenzende Bodenplatte aufweist, so sollte in der oberen Ebene eine Bodenplatte ohne Aussparung verwendet werden. Die Aussparung befindet sich dann an der oberen Bodenplatte des Anbauelements. Auf diese Weise wird zwischen den überlappenden Bodenplatten ein stabiler Verband geschaffen.

Andererseits ist es auch möglich, die Bodenplatten ganz fortzulassen, so daß die Pfosten lediglich auf den einzelnen tellerförmigen Fußplatten 118 stehen.

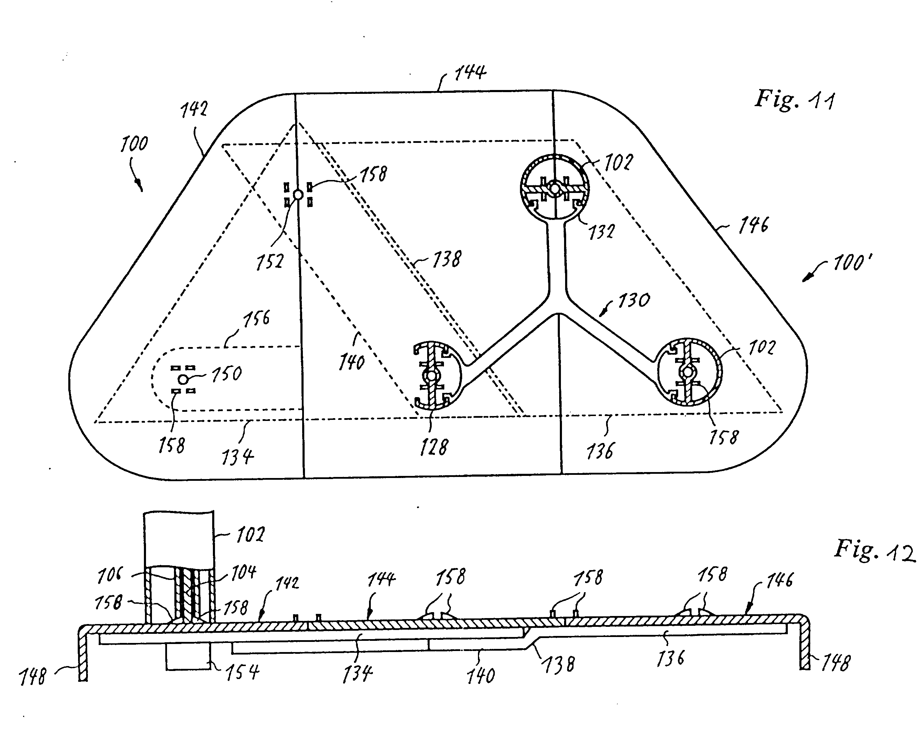

Fig. 11 und 12 zeigen ein weiteres Ausführungsbeispiel des Regalgestells mit sternförmigen Verbindungsteilen 130, deren Eingriffsbereiche 132 von der Seite her in die Halteprofile der Pfosten 102,128 eingerastet werden können.

Eine weitere Vereinfachung der Montage und des Anbaus weiterer Regalelemente wird bei diesem Ausführungsbeispiel durch eine besondere Gestaltung des Fußbereichs erreicht. Für das Grundelement mit drei Pfosten ist eine dreieckige Fußplatte 134 vorgesehen, die die unteren Enden der drei Pfosten miteinander verbindet. Für ein Anbau-Element zur Erweiterung des Regalgestells in der Breite ist eine rautenförmige Fußplatte 136 vorgesehen, die vier Pfosten miteinander verbindet, nämlich zwei Pfosten des Grundelements und die beiden Pfosten des Anbau-Elements. Die Fußplatten 134 und 136 bilden zusammen einen symmetrischen, trapezförmigen Grundriß. Die rautenförmige Fußplatte 136 weist längs ihres an die dreieckige Fußplatte 134 angrenzenden Randes eine Abstufung 138 auf und bildet eine Verbindungslasche 140, die unter die dreieckige Fußplatte 134 greift. Zwei Pfosten des Grundelements sind im Überlappungsbereich zwischen der dreieckigen Fußplatte 134 und der Verbindungslasche 140 angeordnet, so daß die beiden Fußplatten 134,136 durch die Befestigungsschrauben für diese beiden Pfosten starr miteinander verbunden werden. Rautenförmige Fußplatten 136 für weitere Anbau-Elemente können in analoger Weise an der rechten Seite der Fußplatte 136 in Fig. 11 angeschlossen werden.

Zur Verkleidung der Fußplatten 134,136 sind drei verschiedene Typen von Bodenplatten 142,144 und 146 vorgesehen, die jeweils an ihren freien Rändern einen nach unten abgewinkelten Randflansch 148 aufweisen (Fig.12). Die Bodenplatten 142 und 146 haben zueinander spiegelbildliche Grundrisse, die jeweils einer Hälfte der Bodenplatte 120 in Fig. 5 entsprechen. Die Bodenplatte 144 hat dagegen einen rechteckigen Grundriß.

Die Fußplatten 134.136 und die Bodenplatten 142,144 und 146 sind mit Bohrungen 150.152 für Befestigungsschrauben 154 versehen, die in die Schraubenkanäle 106 der Pfosten 102,128 eingeschraubt werden. Die Teilungslinien zwischen den Bodenplatten 142 und 144 und zwischen den Bodenplatten 144 und 146 verlaufen dabei jeweils mitten durch die Bohrungen 152 für die hinteren Pfosten. Wenn das Regalgestell in der Grundversion, ohne Anbau-Element, montiert wird, so werden die rechteckige Bodenplatte 144 und die rautenförmige Fußplatte 136 fortgelassen, und die Bodenplatte 146 wird direkt an die Bodenplatte 142 angeschlossen. In jedem Fall werden die Fußplatten, die Bodenplatten und die unteren Enden der Pfosten durch die Befestigungsschrauben 154 zusammengehalten. Zusätzlich können die Bodenplatten 144 und 146 mit vorspringenden Laschen 156 versehen sein, wie in Fig. 16 für die Bodenplatte 144 durch gestrichelte Linien angedeutet ist. Die Lasche 156 greift unter die benachbarte Bodenplatte 142 und ist an der Befestigungsschraube für den auf der Bodenplatte 142 montierten vorderen Pfosten fixiert.

Wahlweise oder zusätzlich können die Bodenplatten und die Fußplatten auch durch ineinandergreifende Paßstifte und Bohrungen miteinander verbunden sein.

Auf den Oberseiten der Bodenplatten 142,144 und 146 sind um jede der Bohrungen 150,152 herum zwei Paare von vorspringenden Nocken 158 angeordnet, die das untere Ende des Steges 104 des Pfostens zwischen sich aufnehmen. Diese Konstruktion ermöglicht es, die Pfosten auf einfache Weise, mit nur einer einzigen Befestigungschraube 154, mit den zugehörigen Fuß-und Bodenplatte zu verbinden, ohne daß sich der Pfosten beim Anziehen der Befestigungsschraube um seine Längsachse verdrehen kann. Außerdem wird so eine stabile Verankerung der Pfosten auf den Bodenplatten erreicht.

Bei den oben beschriebenen Ausführungsbeispielen werden durch die Verbindungsteile 124,130 jeweils drei senkrechte Pfosten miteinander verbunden. Es sind jedoch auch stabförmige Verbindungsteile denkbar, die lediglich an ihren beiden Enden mit Eingriffsbereichen entsprechend den Eingriffsbereichen 126 oder 132 versehen sind und die jeweils nur zwei senkrechte Pfosten miteinander verbinden. Durch derartige Verbindungsteile können relativ große Abstände zwischen den Pfosten überbrückt werden. Die stabförmigen Verbindungsteile können dabei ihrerseits ein Strangprofil aufweisen, das dem Strangprofil der Pfosten 102 oder 128 entspricht und an das weitere Verbindungsteile im rechten Winkel angeschlossen werden können. Auf diese Weise läßt sich mit Hilfe der Pfosten und Verbindungsteile ein komplexes Raumfachwerk erstellen.

Beispielsweise läßt sich ein Regalelement mit vier senkrechten Pfosten aufbauen, indem die beiden vorderen Pfosten und die beiden hinteren Pfosten jeweils durch querverlaufende stabförmige Verbindungsteile miteinander verbunden werden, die ihrerseits durch in Richtung der Tiefe des Regals verlaufende Verbindungsteile miteinander verbunden sind. Die in Richtung der Tiefe verlaufenden Verbindungsteile können beispielsweise das gleiche Profil wie die Pfosten 102 aufweisen und so eingesetzt sein, daß ihr Halteprofil 110 nach oben weist. Diese Halteprofile können dann zur Befestigung eines Fachbodens genutzt werden.

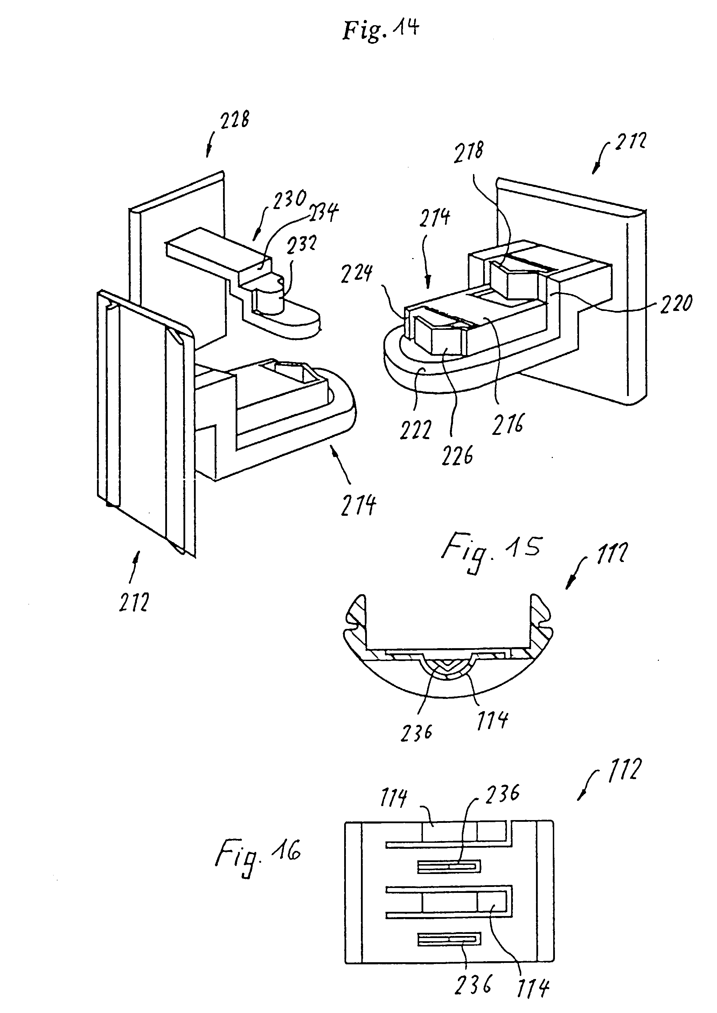

Weitere Regalelemente mit einem ähnlichen Aufbau können angeschlossen werden, indem die Pfosten 102 durch Pfosten 128 mit zwei Halteprofilen ersetzt werden. Bei den angeschlossenen Regalelementen kann es sich auch um die für CD-Kassetten vorgesehenen Regalelemente 100,102' gemäß Figur 15 handeln. Auf diese Weise läßt sich eine Regalwand aufbauen, in der Fachbodenregale mit relativ breiten Regalfächern kombiniert sind mit relativ schmalen CD-Regalen, die die Regalfront optisch auflockern und zugleich eine geordnete Unterbringung von CD-Kassetten gestatten.

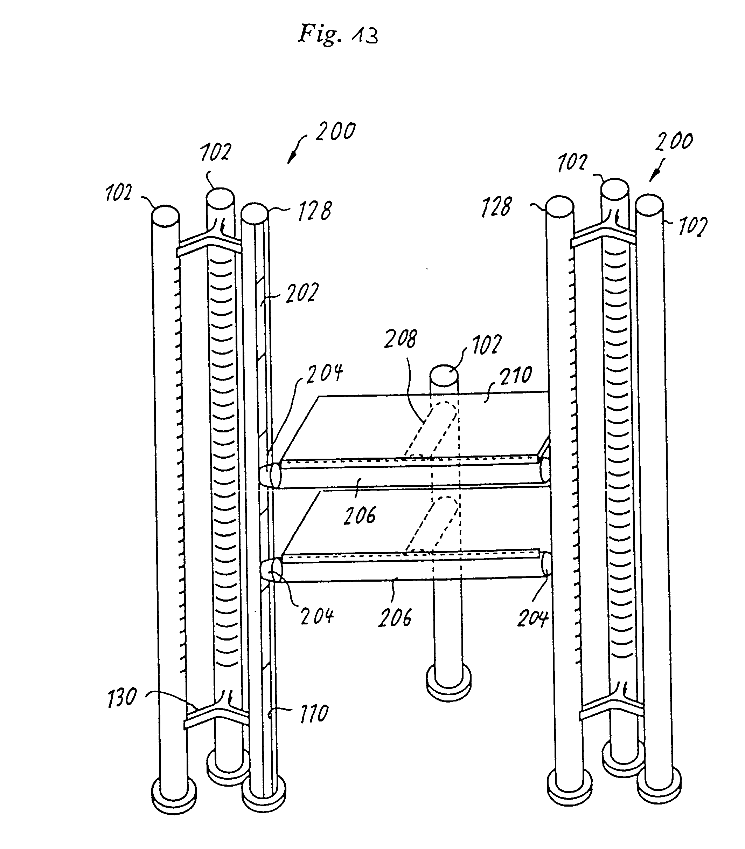

Ein Beispiel für eine solche Regalkombmation ist in Figur 13 dargestellt. Zwei turmförmige Regalgestelle 200 für CD-Kassetten werden jeweils durch zwei Pfosten 102 und einen Pfosten 128 gebildet. Die Halteprofile 110 auf der von den CDs abgewandten Seite des Pfostens 128 sind jeweils durch Bundeinsätze 202 verschlossen. An einigen Stellen sind jedoch anders gestaltete Einsätze 204 eingesetzt. Diese Einsätze 204 sind als Endstücke für rohrförmige Querstreben 206 ausgebildet und gestatten es, die Querstreben 206 an den Pfosten 128 zu befestigen, so daß sie die beiden Türme 200 miteinander verbinden. Die Querstreben 206 sind mit den Pfosten 102 oder 128 baugleich und weisen somit ebenfalls längsverlaufende Halteprofile auf. Mit Hilfe von Einsätzen, die den Einsätzen 204 entsprechen, können somit weitere Streben 208 angeschlossen werden, die in die Tiefe des Regals verlaufen. Die anderen Enden der Streben 208 sind an einem einzeln stehenden Pfosten 102 befestigt, und zwar wiederum mit Einsätzen entsprechend den Einsätzen 204, die in die Halteprofile des Pfostens 102 eingreifen.

Auf diese Weise wird eine Tragkonstruktion für Regalböden 210 geschaffen.

Auf den Regalböden 210 können beispielsweise Audiogeräte wie CD-Spieler und dergleichen abgestellt werden, und die zugehörigen CDs werden griffbereit in den Türmen 200 untergebracht.

Figur 14 illustriert eine Möglichkeit, in den "CD-Türmen 200" auch Tonträgerkassetten mit anderen Formaten unterzubringen. Hierzu werden in die linken und rechten Pfosten 102,128 des Turms 200 zwei spiegelbildlich gestaltete Einsätze 212 eingesetzt, die jeweils eine vorspringende stufenförmige Zunge 214 aufweisen.

Jede Zunge 214 bildet eine Auflagefläche 216 und eine mit einer Klemmfeder 218 versehene vertikale Führungsfläche 220 für Kassetten eines größeren Formats und zusätzlich am freien Ende eine Auflagefläche 222 und eine Führungsfläche 224 mit Klemmfeder 226 für eine Kassette eines kleineren Formats. Beispielsweise kann es sich bei den Kassetten des größeren Formats um normale Musikkassetten MC oder sogenannte DCC-Kassetten handeln, während die Auflageflächen 222 für DAT-Kassetten vorgesehen sind.

An einem Einsatz 228 für den dritten Pfosten 202 ist eine verhältnismäßig lange Zunge 230 ausgebildet, durch die zwei vertikale Anlageflächen 232 und 234 gebildet werden, die ein Durchschieben der Kassetten nach hinten verhindern.

Durch die Klemmfedern 218 und 226 werden die Kassetten mit leichtem Druck klemmend gehalten, so daß sie gegen Herausfallen gesichert sind.

Entsprechende Klemmfedern 236 können auch bei den Einsätzen 112 für CD-Kassetten jeweils zwischen den Auflagestegen 114 vorgesehen sein, wie in Figuren 15 und 16 gezeigt ist.

## Patentansprüche

1. Regalgestell mit mehreren senkrechten, als Strangprofil ausgebildeten Pfosten (16,18;102;128), die wenigstens im Bereich des oberen und unteren Endes miteinander verbunden sind und an denen Auflagestege (60;114,114') derart angeordnet sind, daß Einschubfächer zur Aufnahme von im Grundriß übereinstimmenden Gegenständen (12,14) in verschiedenen Höhen zwischen den Pfosten gebildet werden, dadurch **gekennzeichnet**, daß die Pfosten (16,18;102;128) jeweils wenigstens auf einer Seite mit einem in Längsrichtung der Pfosten durchgehenden, als Einschub- oder Rastprofil ausgebildeten Halteprofil (52;110) versehen sind, und daß separate Einsätze (54,54a,54b;112), an denen jeweils einer oder mehrere der Auflagestege (60;114,114') ausgebildet sind, lösbar in die Halteprofile (52;110) eingeschoben bzw. eingerastet sind.

2. Regalgestell nach Anspruch 1, dadurch **gekennzeichnet**, daß die Auflagestege (114) für wenigstens einige der Einschubfächer als in vertikaler Richtung steife, bei der Einschubbewegung waagerecht in die Piosten zurückdrückbare Federglieder ausgebildet sind.

3. Regalgestell nach Anspruch 2, zur wahlweisen Aufnahme von Einzel- oder Doppel-Compaktdiskkassetten (12,14), dadurch **gekennzeichnet**, daß ein einzelnes Regalelement genau drei senkrechte Pfosten (16,18) aufweist, deren Auflagestege die Compaktdisk-Kassetten (12,14) an ihren beiden längeren Kanten und an der in der Tiefe des Regals liegenden kürzeren Kante abstützen, und daß die Auflagestege derart angeordnet und bemessen sind, daß ein als Federglied (28) ausgebildeter Auflagesteg an dem in Einschubrichtung hinteren Pfosten (16) in die Nut in der Kantenfläche einer Doppel-Compact-diskkassette (14) eingreift, wenn diese auf den nächsttieferen Auflagestegen aufliegt.

4. Regalgestell nach einem der vorstehenden Ansprüche, **gekennzeichnet** durch ein Grundelement aus drei lösbar miteinander verbundenen senkrechten Pfosten (16), die jeweils genau eine Reihe von Auflagestegen (60) aufweisen, und durch wenigstens einen Erweiterungsbausatz aus einem weiteren Pfosten (16), der mit den Pfosten des Grundelements baugleich ist, und einem Pfosten (18), der zwei Reihen von Auflagestegen (60) aufweist.

5. Regalgestell nach Anspruch 4, **gekennzeichnet** durch eine die Pfosten (16) des Grundelements miteinander verbindenden Grundplatte (42) und eine in gleicher Ebene mit der Grundplatte (42) verbindbare Erweiterungsplatte (44), die eine zu einer Ecke der Grundplatte (42) komplementäre Ausnehmung (46) aufweist und im übrigen einen mit der Grundplatte (42) identischen Grundriß aufweist.

6. Regalgestell nach einem der vorstehenden Ansprüche, dadurch **gekennzeichnet**, daß die Pfosten (16,18) einschließlich der Auflagestege (60) einen kreisförmigen Querschnitt aufweisen und im Bereich zwischen den Auflagestegen mit im Grundriß kreissegmentförmigen Ausnehmungen (58) versehen sind.

7. Regalgestell nach Anspruch 1, dadurch **gekennzeichnet**, daß wenigstens ein Verbindungsteil (124; 130), das die Pfosten (102; 128) miteinander verbindet, mit einer der Anzahl der Pfosten (102;128) entsprechenden Einzahl von Eingriffsbereichen (126; 132) versehen ist, die in die Halteprofile (110) der mehreren Pfosten eingreifen.

8. Regalgestell nach einem der vorstehenden Ansprüche, dadurch **gekennzeichnet**, daß die Pfosten (102; 128) im Inneren einen durch wenigstens einen radialen Steg (104) mit der Umfangswand (108) verbundenen Schraubenkanal (106) aufweisen, und daß ein den Fuß des Regalgestells bildendes Verbindungsteil eine Bodenplatte (120; 142,144,146) aufweist, die mit Bohrungen (150,152) für von unten in die Schraubenkanäle (106) der Pfosten einschraubbare Befestigungsschrauben (154) versehen ist und auf ihrer Oberseite an jeder der Bohrungen (150,152) wenigstens zwei vorspringende Nocken (158) aufweist, die das untere Ende des Steges (104) des Pfostens zwischen sich aufnehmen.

9. Regalgestell nach Anspruch 1, **gekennzeichnet** durch
- eine dreieckige Fußplatte (134), die mit drei Bohrungen (150,152) versehen ist, durch die hindurch Befestigungsschrauben (154) von unten in Schraubenkanäle (106) der Pfosten (102; 128) einschraubbar sind, und
- eine rautenförmige Fußplatte (136) mit vier Bohrungen (150,152), von denen zwei in einer mit der dreieckigen Fußplatte (134) überlappenden Lasche (140) ausgebildet sind und mit zweien der Bohrungen der dreieckigen Fußplatte (134) fluchten.

10. Regalgestell nach Anspruch 1, dadurch **gekennzeichnet**, daß an das untere Ende jedes Pfostens (102; 128) eine tellerförmige Fußplatte (118) angeschraubt ist.

11. Regalgestell nach Anspruch 9 oder 10, dadurch **gekennzeichnet**, daß zwischen den Fußplatten (188; 134,136) und den unteren Enden der Pfosten (102; 128) eine Bodenplatte (120; 142,144,146) eingefügt ist, die die Fußplatten überdeckt.

12. Regalgestell nach Anspruch 11, dadurch **gekennzeichnet**, daß mehrere Bodenplatten (120; 142,144,146) vorgesehen sind, die fliesenartig zu einer geschlossenen Fläche aneinandergefügt sind.

13. Regalgestell nach den Ansprüchen 9 und 12, **gekennzeichnet** durch zwei zueinander spiegelbildliche Bodenplatten (142,146), deren Grundriß jeweils die Form eines rechtwinkligen Dreiecks aufweist, und eine zwischen diesen eingefügte rechteckige Bodenplatte (144).

14. Regalgestell nach Anspruch 7, **gekennzeichnet** durch wenigstens zwei Dreiergruppen (200) aus durch die Verbindungsteile (130) miteinander verbundenen Pfosten (102;128), bei denen jeweils wenigstens ein Pfosten (128) auch auf der von den beiden anderen Pfosten (102) abgewandten Seite mit Halteprofilen (110) versehen ist, und durch wenigstens eine waagerechte Strebe (206), die an beiden Enden mit in die Halteprofile (110) der Pfosten (128) eingreifenden Endstücken (204) versehen ist und die beiden Dreiergruppen miteiannder verbindet.

15. Regalgestell nach Anspruch 14, dadurch **gekennzeichnet,** daß die waagerechte Strebe (206) ihrerseits mit Halteprofilen (110) versehen ist, in denen ein Ende wenigstens einer weiteren waagerechten Strebe (208) verankert ist, deren anderes Ende in das Halteprofil eines zusätzlichen einzeln stehenden Pfostens (102) eingreift.

16. Regalgestell nach Anspruch 1, dadurch **gekennzeichnet,** daß die Einsätze (112;212) jeweils zwischen den Auflagestegen (114;216,222) mit elastischen Klemmfedern (218,226;236) versehen sind.

## Claims

1. A shelving frame comprising several vertical posts (16,18;102;128) designed as extruded profiles which are joined together at least in the region of the upper and lower end and on which supporting bars (60;114,114') are arranged in such a way that insertion shelves for holding objects (12,14) which correspond in cross-section are formed at various heights between the posts, characterized in that the posts (16,18;102; 128) are each provided at least on one side with a holding profile (52;110) which is continuous in the longitudinal direction of the posts and is designed as an insertion or engagement profile, and in that separate inserts (54,54a,54b; 112), on each of which are formed one or more of the supporting bars (60;114,114'), are detachably inserted or engaged into the holding profiles (52;110).

2. A shelving frame according to claim 1, characterized in that the supporting bars (114) for at least some of the insertion shelves are designed as spring elements which are rigid in the vertical direction and which may be pressed back horizontally into the posts during the insertion movement.

3. A shelving frame according to claim 2, for holding single or alternatively double compact disc cassettes (12,14), characterized in that a single shelving element has exactly three vertical posts (16,18) of which the supporting bars support the compact disc cassettes (12,14) on their two longer edges and on the shorter edge located deep inside the shelving, and in that the supporting bars are arranged and dimensioned such that a supporting bar designed as a spring element (28) on the rear post (16) in the insertion direction engages into the groove in the edge surface of a double compact disc cassette (14) when the latter is resting on the supporting bars immediately below.

4. A shelving frame according to one of the preceding claims, characterized by a base element consisting of three vertical posts (16) detachably joined together, each of which has exactly one row of supporting bars (60), and by at least one extension kit consisting of a further post (16) which is identical in design to the posts of the base element, and a post (18) which has two rows of supporting bars (60).

5. A shelving frame according to claim 4, characterized by a mounting plate (42) joining the posts (16) of the base element together and an extension plate (44) which can be joined in the same plane to the mounting plate (42) and which has a recess (46) complementary to a corner of the mounting plate (42) and which otherwise has an identical cross-section to the mounting plate (42).

6. A shelving frame according to one of the preceding claims, characterized in that the posts (16,18) including the supporting bars (60) have a circular cross-section and are provided in the region between the supporting bars with recesses (58) whose cross-section is in the shape of a circular segment.

7. A shelving frame according to claim 1, characterized in that at least one connection part (124;130) which joins the posts (102;128) together is provided with a number of engagement regions (126;132) corresponding to the number of posts (102;128) which engage into the holding profiles (110) of the various posts.

8. A shelving frame according to one of the preceding claims, characterized in that in their interior the posts (102;128) have a screw slot (106) which is connected by at least one radial bar (104) to the peripheral wall (108), and in that a connection part forming the foot of the shelving frame has a base plate (120;142,144,146) which is provided with drilled holes (150,152) for fastening screws (154) which may be screwed from beneath into the screw slots (106) of the posts and has on its upper side at each of the drilled holes (150,152) at least two projecting cams (158) which hold the lower end of the bar (104) of the post between them.

9. A shelving frame according to claim 1, characterized by
- a triangular foot-plate (134) which is provided with three drilled holes (150,152) through which fastening screws (154) may be screwed from beneath into screw slots (106) of the posts (102;128), and
- a rhombic foot-plate (136) with four drilled holes (150, 152), of which two are formed in a link-plate (140) overlapping the triangular foot-plate (134) and are aligned with two of the drilled holes of the triangular foot-plate (134).

10. A shelving frame according to claim 1, characterized in that screwed to the lower end of each post (102;128) is a disc-shaped foot-plate (118).

11. A shelving frame according to claim 9 or 10, characterized in that inserted between the foot-plates (188;134,136) and the lower ends of the posts (102;128) is a base plate (120;142,144,146) which covers the foot-plates.

12. A shelving frame according to claim 11, characterized in that several base plates (120;142,144,146) are provided which are joined together like floor tiles to form a closed surface.

13. A shelving frame according to claims 9 and 12, characterized by two base plates (142,146) which are in mirror-image relationship to one another and the cross-section of which in each case is in the shape of a right-angled triangle, and a rectangular base plate (144) inserted between these.

14. A shelving frame according to claim 7, characterized by at least two groups (200) of three posts (102;128) which are joined together by the connection parts (130), in each of which at least one post (128) is also provided with holding profiles (110) on the side facing away from the two other posts (102), and by at least one horizontal strut (206) which is provided at both ends with end pieces (204) engaging into the holding profiles (110) of the posts (128) and which joins the two groups of three posts together.

15. A shelving frame according to claim 14, characterized in that the horizontal strut (206) is for its part provided with holding profiles (110) in which one end of at least one further horizontal strut (208) is anchored, the other end of which engages into the holding profile of an additional separate post (102).

16. A shelving frame according to claim 1, characterized in that the inserts (112;212) are each provided between the supporting bars (114;216,222) with resilient clamping springs (218,226;236).

## Revendications

1. Bâti de rayonnage comportant plusieurs montants verticaux (16, 18 ; 102 ; 128), conçus comme des profilés extrudés, qui sont reliés entre eux au moins dans la zone de leurs extrémités supérieure et inférieure et sur lesquels des bandes d'appui (60 ; 114, 114') sont disposées de manière à former entre les montants, à différentes hauteurs, des compartiments d'insertion destinés à recevoir des objets (12, 14) présentant un tracé correspondant, **caractérisé** en ce que les montants (16, 18 ; 102 ; 128) sont pourvus au moins sur un côté d'un profilé de support (52 ; 110) conçu comme un profilé enfichable ou encliquetable continu dans le sens longitudinal des montants, et en ce que des inserts séparés (54, 54a, 54b ; 112) sur lesquels sont formées une ou plusieurs bandes d'appui (60 ; 114, 114') sont enfichés ou encliquetés de façon amovible dans les profilés de support (52 ; l10).

2. Bâti de rayonnage selon la revendication 1, **caractérisé** en ce que les bandes d'appui (114) sont conçues pour quelques-uns au moins des compartiments d'insertion comme des éléments élastiques rigides dans le sens vertical et aptes à être repoussés à l'horizontale dans les montants lors du mouvement d'insertion.

3. Bâti de rayonnage selon la revendication 2, prévu pour recevoir au choix des boîtiers de disques compacts simples ou doubles (12, 14), **caractérisé** en ce qu'un élément de rayonnage individuel comporte exactement trois montants verticaux (16, 18) dont les bandes d'appui supportent les boîtiers de disques compacts (12, 14) au niveau de leurs deux côtés longs et au niveau du côté court situé dans la profondeur du rayonnage, et en ce que les bandes d'appui sont disposées et dimensionnées pour qu'une bande d'appui conçue comme un élément élastique (28) s'engage, au niveau du montant (16) arrière dans le sens d'insertion, dans la rainure prévue dans la surface du bord d'un boîtier de disque compact double (14) lorsque ledit boîtier est posé sur les bandes d'appui voisines inférieures.

4. Bâti de rayonnage selon l'une des revendications précédentes, **caractérisé** par un élément de base formé de trois montants verticaux (16) reliés entre eux de façon amovible qui comportent chacun exactement une rangée de bandes d'appui (60), et par au moins un jeu d'extension formé d'un autre montant (16) identique à ceux de l'élément de base, et d'un montant (18) qui comporte deux rangées de bandes d'appui (60).

5. Bâti de rayonnage selon la revendication 4, **caractérisé** par une plaque de montage (42) qui relie entre eux les montants (16) de l'élément de base, et une plaque d'extension (44) qui est apte à être reliée dans le même plan à la plaque de montage (42), qui comporte un creux (46) complémentaire par rapport à un coin de celle-ci et qui présente un tracé pour le reste identique à celui de la plaque de montage (42).

6. Bâti de rayonnage selon l'une des revendications précédentes, **caractérisé** en ce que les montants (16, 18) présentent avec les bandes d'appui (60) une section transversale circulaire et sont pourvus, dans la zone comprise entre les bandes d'appui, de creux (58) en forme de segments de cercle, vus en plan.

7. Bâti de rayonnage selon la revendication 1, **caractérisé** en ce qu'au moins un élément de liaison (124 ; 130) reliant les montants (102 ; 128) entre eux est pourvu d'un nombre correspondant au nombre de montants (102 ; 128) de zones d'engagement (126 ; 132) qui s'engagent dans les profilés de support (110) des montants.

8. Bâti de rayonnage selon l'une des revendications précédentes, **caractérisé** en ce que les montants (102 ; 128) contiennent un conduit de vis (106) relié à la paroi périphérique (108) par au moins une bande radiale (104), et en ce qu'un élément de liaison formant le pied du bâti de rayonnage comporte une plaque de base (120 ; 142, 144, 146) qui est pourvue de perçages (150, 152) prévus pour des vis de fixation (154) aptes à être vissées par le bas dans les conduits de vis (106) des montants, et qui comporte sur son côté supérieur, au niveau de chacun des perçages (150, 152), au moins deux saillies (158) qui reçoivent entre elles l'extrémité inférieure de la bande (104) du montant.

9. Bâti de rayonnage selon la revendication 1, **caractérisé** par
- une semelle triangulaire (134) pourvue de trois perçages (150, 152) par lesquels les vis de fixation (154) peuvent être vissées par le bas dans les conduits de vis (106) des montants (102 ; 128), et
- une semelle en forme de losange (136) pourvue de quatre perçages (150, 152) dont deux sont formés dans une languette (140) chevauchant la semelle triangulaire (134) et sont dans l'alignement de deux des perçages de ladite semelle triangulaire (134).

10. Bâti selon la revendication 1, **caractérisé** en ce qu'une semelle en forme de plateau (118) est vissée à l'extrémité inférieure de chaque montant (102 ; 128).

11. Bâti de rayonnage selon les revendications 9 ou 10, **caractérisé** en ce qu'il est prévu, insérée entre les semelles (188 ; 134, 136) et les extrémités inférieures des montants (102 ; 128), une plaque de base (120 ; 142, 144, 146) qui couvre les semelles.

12. Bâti selon la revendication 11, **caractérisé** en ce qu'il est prévu plusieurs plaques de base (120 ; 142, 144, 146) qui sont jointes à la manière de dalles pour former une surface fermée.

13. Bâti selon les revendications 9 et 12, **caractérisé** par deux plaques de base symétriques (142, 146) dont le tracé a la forme d'un triangle rectangle, et une plaque de base rectangulaire (144) insérée entre celles-ci.

14. Bâti de rayonnage selon la revendication 7, **caractérisé** par au moins deux groupes ternaires (200) de montants (102 ; 128) reliés entre eux par les éléments de liaison (130), dans lesquels au moins un montant (128) est pourvu de profilés de support (110) même sur le côté opposé aux deux autres montants (102), et par au moins une entretoise horizontale (206) qui est pourvue à ses deux extrémités de pièces d'extrémité (204) s'engageant dans les profilés de support (110) des montants (128), et qui relie les deux groupes ternaires.

15. Bâti de rayonnage selon la revendication 14, **caractérisé** en ce que l'entretoise horizontale (206) est elle-même pourvue de profilés de support (110) dans lesquels est fixée une extrémité d'au moins une autre entretoise (208) dont la seconde extrémité s'engage dans le profilé de support d'un montant supplémentaire (102) posé séparément.

16. Bâti de rayonnage selon la revendication 1, **caractérisé** en ce que les inserts (112 ; 212) sont pourvus entre les bandes d'appui (114 ; 216, 222) de ressorts de serrage élastiques (218, 226 ; 236).
